# EUROPÄISCHE PATENTSCHRIFT

(11) **EP 1 701 067 B1**
(45) Veröffentlichungstag und Bekanntmachung des Hinweises auf die Patenterteilung: **07.05.2008**
(21) Anmeldenummer: 06002785.1
(22) Anmeldetag: 11.02.2006
(51) Int. Cl.: F16H 61/28

(54) **Verfahren zur Steuerung von Schaltabläufen in einem automatisierten Schaltgetriebe in Vorgelegebauweise**
Method of controlling the gear change operation in an automated transmission of countershaft type
Procédé de contrôle du déroulement des changements de rapports sur une transmission automatique à arbre de renvoi

(30) Priorität: 11.03.2005 DE 102005011273
(43) Veröffentlichungstag der Anmeldung: 13.09.2006
(73) Patentinhaber: ZF FRIEDRICHSHAFEN AG, 88038 Friedrichshafen (DE)
(72) Erfinder: Petzold, Rainer, 88045 Friedrichshafen (DE); Veittinger, Stefan, 88085 Langenargen (DE); Steinborn, Mario, 88046 Friedrichshafen (DE)

(56) Entgegenhaltungen:
- EP-A- 0 310 387
- EP-A- 0 723 097
- EP-A- 1 333 202
- WO-A-02/32713
- WO-A-02/061307
- DE-A1- 19 756 637
- DE-A1- 19 756 638

## Beschreibung

Die Erfindung betrifft ein Verfahren zur Steuerung von Schaltabläufen in einem automatisierten Schaltgetriebe in Vorgelegebauweise gemäß dem Oberbegriff des Patentanspruches 1.

Automatisierte Schaltgetriebe für Kraftfahrzeuge sind üblicherweise als Stufenwechselgetriebe in Vorgelegebauweise ausgeführt, bei denen Losräder und Festräder auf wenigstens einer Getriebeeingangswelle sowie einer Getriebeausgangswelle angeordnet und zumindest paarweise im Zahneingriff miteinander sind. Zur Realisierung eines konkreten Getriebegangs wird ein Losrad mittels einer Schalt- oder Schiebemuffe mit einer gemeinsamen Getriebewelle drehfest verbunden, so dass eine Drehmomentübergabe von dem Festrad auf das Losrad erfolgen kann. Die Schiebemuffe ist dazu drehfest sowie axial verschiebbar auf der gemeinsamen Getriebewelle angeordnet und wird abweichend von einem manuell schaltbaren Getriebe mittels eines Aktuators bzw. einer Stelleinrichtung betätigt, welcher seinerseits von einem Getriebesteuerungsgerät angesteuert wird. Ein solcher Aktuator kann bekanntermaßen hydraulisch, pneumatisch oder elektrisch betätigbar ausgebildet sein. Die Ansteuerung eines solchen Aktuators erfolgt mit Hilfe von Steuerungsprogrammen aufgrund von Sensorinformationen, die dem Steuergerät von geeigneten Sensoren zugeleitet werden.

In der Praxis werden an solche automatisierten Schaltgetriebe sowie deren Steuerungs- und Regelungssystem berechtigtenrveise hohe Ansprüche gestellt, da diese eine lange Lebensdauer, einen hohen Schaltkomfort, eine große Funktionssicherheit, geringe Schaltgeräusche, kurze Schaltzeiten sowie eine schnelle Verfügbarkeit nach dem Inbetriebnehmen des Fahrzeugs aufweisen bzw. ermöglichen sollen.

Diese Anforderungen stellen an die Steuerung und Regelung eines solchen Getriebes zum Teil widerstreitende Forderungen. So führt die Forderung nach kurzen Schaltzeiten zu vergleichsweise hohen Betätigungsgeschwindig-Reiten der Aktuatoren für die Schiebemuffen, wodurch hohe Auftreffgeschwindigkeiten der Verzahnungen von Losrad und Schiebemuffe zu verzeichnen sind. Da eine Schiebemuffe üblicherweise durch einen Aktuator betätigt wird, sind diese beiden Bauteile über Schaltstangen und Schaltgabeln miteinander verbunden, welches die bewegte Masse einer solchen Schiebemuffenbetätigungseinrichtung und damit die kinetische Energie der bewegten Teile derselben erhöht.

Dies führt zu vergleichsweise lauten Schaltgeräuschen, die durch den Aufprall der Verzahnungen zwischen Losrad und Schiebemuffe entstehen, und hat verständlicherweise Einfluss auf die Lebensdauer einer solchen Schalteinrichtung, so dass diese Getriebeteile sehr robust auszulegen sind. Dies führt zu einem erhöhten Getriebegewicht oder zumindest zu erhöhten Herstellkosten.

Um dieser Problematik zu begegnen, wird in der DE 197 56 637 A1 und der DE 197 56 639 A1 eine hilfskraftunterstützte Schalteinrichtung für ein mehrgängiges Stufenwechselgetriebe in Vorgelegebauweise vorgeschlagen, mit Ventilen und Schaltzylindern, in denen von einem Fluid bewegte Kolben vorgesehen sind, und mit Schaltelementen, mit denen in jeweils einer Schaltgruppe Bauteile des Getriebes zur Bildung einer Drehmomentübertragung verbindbar sind. Diese Schalteinrichtung ist zudem dadurch gekennzeichnet, dass für jede Schaltgruppe eine Einheit vorgesehen ist, in der die Ventile, Schaltzylinder, Kolben und Schaltelemente zusammengefasst sind. Durch diesen Aufbau entfallen die sonst üblichen Verbindungselemente zwischen Schaltgabel und Aktuator, welches wegen des Wegfalls von zu bewegenden Massen die Reaktionszeit zwischen dem eine Schaltung auslösenden Signal und der Durchführung dieser Schaltung sowie die in das System hineinzubringende kinetische Energie reduziert.

Zudem sind die Ventile als gepulste 2/2-Wegventile ausgebildet, so dass bei der Durchführung des Schaltvorgangs eine Anpassung der Schaltkraft und Schaltzeit vorgenommen werden kann, so dass starke Auftreffgeräusche von den Verzahnungen zwischen Losrad und Schiebemuffe aus baulichen Gründen an sich vorteilhaft vermieden werden können. Problematisch ist jedoch die konkrete Steuerung dieser Ventile, insbesondere bei Zahn-auf-Zahn-Stellungen von Innenverzahnung einer Schiebemuffe und Mitnahmeverzahnung eines Losrades bei der Durchführung eines Schaltvorgangs sowie bei deren Auflösung mit anschließender Durchschaltung.

Eine weitere, eher konventionelle Schalteinrichtung für ein automatisiertes Schaltgetriebe ist aus der DE 102 24 357 A1 bekannt, mit der auch der Betriebsfall befriedigend gelöst werden soll, in dem es zu einer Zahn-auf-Zahn-Stellung zwischen der Innenverzahnung der Schiebemuffe und der Mitnahmeverzahnung des Losrades kommt. Dazu ist eine federelastische Betätigung der Schalt- oder Schiebemuffe vorgesehen, wobei von einem Aktuator der gesamte Stellweg für die Schiebemuffe in eine zwischen Aktuator und Schiebemuffe angeordneten Schaltstange zwar eingeleitet wird, es jedoch infolge einer Zahn-auf-Zahn-Stellung von Innenverzahnung der Schiebemuffe und der Mitnahmeverzahnung des Losrades zu einer Nichtdurchführbarkeit des Gangeinlegens kommt. Wird die Getriebehauptwelle oder das Gangrad jedoch gedreht, so kommt es zu einer federkraftunterstützten Fortsetzung der Schaltung des Gangs, bei der eine Feder die zuvor nicht in einen Stellweg umgesetzte Stellkraft des Aktuators freigibt. Nachteilig an dieser Schalteinrichtung ist, dass sowohl beim Auftreffen der Verzahnungen von Schiebemuffe und Losrad als auch beim Durchschalten störende Schaltgeräusche durch den Aufprall der Verzahnungen festzustellen sind.

Aus der DE 196 10 827 A1 ein Verfahren zum Bewerten von Zahnradgeräuschen, insbesondere bei Getrieben bekannt, mit dem die Ffersferrung von geräuscharmen Zahnradpaarungen begünstigt werden soll. Zur Bewertung von Verzahnungsgeräuschen wird die Rotationsgeschwindigkeit des zu untersuchenden Zahnrades gemessen sowie die Verzahnungsgeräusche mittels eines Mikrophons aufgenommenen und beide Signale einem FFT-Analysator (Fast-Fourier-Analysator) zugeführt. Als Ausgangssignal stellt der FFT-Analysator in Abhängigkeit von der Rotationsgeschwindigkeit des Zahnrades und für eine vorgegebene Zahnradstellung einen Schalldruckwert bereit.

Schließlich ist aus der EP 1 333 202 A1 ein gattungsgemäßes Verfahren bekannt, mit dem laute Schaltgeraüsche minimiert werden.

Die vorliegende Erfindung betrifft ein Verfahren zur Steuerung von Schaltabläufen in einem automatisierten Schaltgetriebe in Vorlegebauweise. Ein solches Getriebe und eine derartige Schaltvorrichtung können beispielsweise weitgehend so wie aus der DE 197 56 637 A1 und der DE 197 56 639 A1 bekannt ausgebildet sein. Zur weiteren Erläuterung des technischen Hintergrunds und der Erfindung wird daher auf die der Beschreibung beigefügten Zeichnungsfiguren verwiesen. Diese zeigen in
- Fig. 1: eine schematische Darstellung eines automatisierten Schaltgetriebes mit Schalteinrichtungen,
- Fig. 2: eine Anordnung von Schalteinrichtungen in Reihe, und
- Fig. 3: eine Darstellung einer Schalteinrichtung mit einem Schaltschema für die Aktuatorbetätigung mit Hilfe von vier 2/2-Wegventilen.

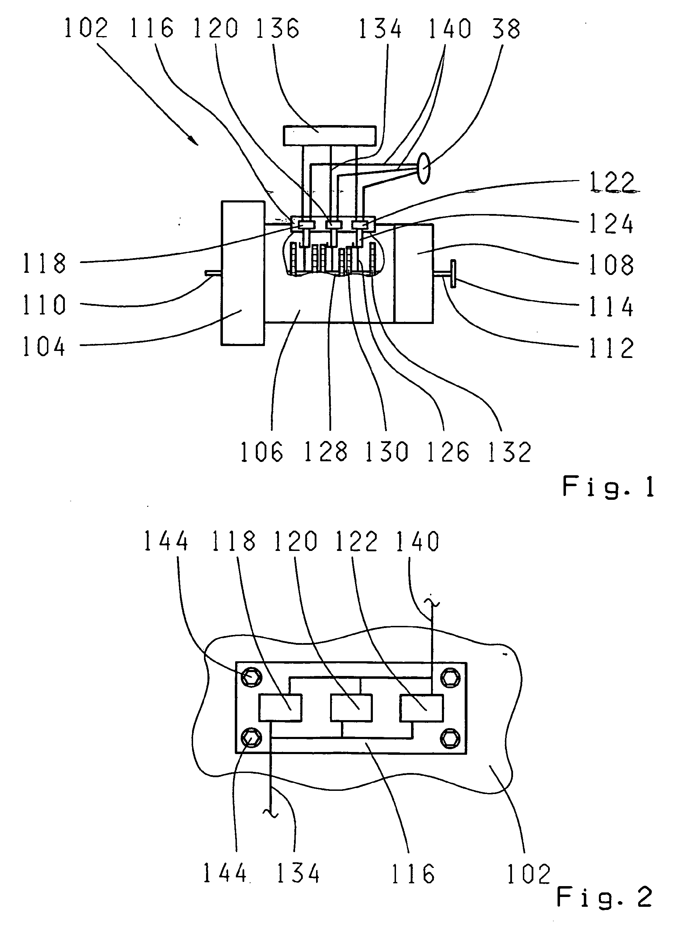

Demnach zeigt Fig. 1 in schematischer Darstellung ein Getriebe 102, mit einer Kupplungsglocke 104, einem Hauptgetriebe 106 und einem Hilfsgetriebe 108, sowie mit einer Antriebswelle 110 und einer Abtriebswelle 112 mit einem Abtriebsflansch 114. An dem Hauptgetriebe 106 ist ein Bauteil 116 angeordnet, welches drei einzelne Schalteinrichtungen 118, 120 und 122 für jeweils zwei Ganglosräder 130, 132 aufweist. Das Bauteil 116 ist gemäß Fig. 2 mit Hilfe von Verbindüngselementen 144 an dem Getriebe 102 befestig.

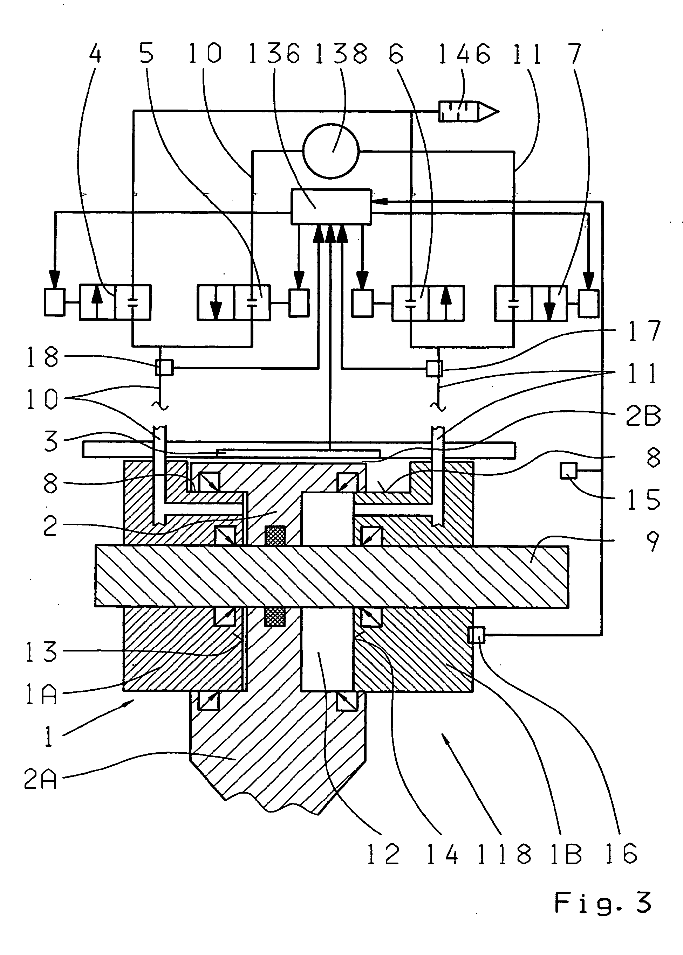

Die beispielhaft in Fig. 2 und Fig. 3 dargestellte Schalteinrichtung 118 greift mit einer Schaltgabel 124 in eine Schiebemuffe 126 ein, die entlang einer Welle 128 axial verschiebbar und mit dieser Welle 128 drehfest verbunden ist. Durch eine Verschiebung dieser Schiebemuffe 126 ist diese wie eingangs erläutert entweder mit dem Zahnrad 130 oder mit dem Zahnrad 132 verbindbar, wodurch ein Getriebegang geschaltet und eine Drehmomentübertragung von der Antriebswelle 110 zu der Abtriebswelle 112 möglich ist.

Die Schalteinrichtungen 118, 120 und 122 sind über elektrische Leitungen 134 mit einer Steuereinrichtung 136, beispielsweise einen Getriebesteuerungsrechner oder einen Fahrzeugleitrechner, verbunden. Zudem sind die Schalteinrichtungen 118, 120 und 122 mit einer Versorgungseinrichtung 138 für ein Betätigungsfluid über Leitungen 140 verbunden.

Fig. 3 zeigt eine Prinzipdarstellung einer Schalteinrichtung 118 für automatisierte Schaltgetriebe in Fahrzeugen mit Wegmesseinrichtung und pulsfähigen Wegventilen im Längsschnitt, welche einen Schaltzylinder 1, gebildet aus den Zylinderteilen 1A und 1B, und einen Schaltkolben 2 aufweist.

Durch die aus der DE 197 56 637 A1 und der DE 197 56 639 A1 bekannten Gestaltung des Schaltzylinders 1 mit seinen beiden Zylinderteilen 1A und 1 B können die bewegten Massen erheblich reduziert werden. So bewegt sich der als pneumatisches oder hydraulisches Schaltelement ausgebildete Schaltkolben 2 zwischen diesen beiden Zylinderteilen 1A und 1 B, welcher gleichzeitig als Schaltgabel 2A fungiert, so dass auf eine gesonderte Schaltgabel sowie Schaltstangen mit Vorteil verzichtet werden kann.

Zur Erfassung der Stellung des Schaltkolbens 2 im Schaltzylinder 1 bzw. zwischen den Zylinderteilen 1A und 1 B ist gemäß Fig. 3 parallel zur Verschiebeachse des Schaltkolbens 2 eine Wegmesseinrichtung 3 angeordnet (beispielsweise ausgebildet als induktive Wegsensoren) und mit der Steuereinrichtung 136 verbunden. Diese Steuereinrichtung 136 ermittelt die Stellung des Schaltkolbens 2 und erzeugt Steuersignale zur Steuerung von pulsfähigen 2/2-Wegventilen 4, 5 und 6, 7.

Der Schaltkolben 2 weist einen Führungsabsatz 2B auf, über den er in eine Eindrehung 8, welche an jedem der beiden Zylinderteile 1A und 1 B ausgebildet ist, geführt ist. Sowohl die Zylinderteile 1A und 1 B als auch der Steuerkolben 2 sind um eine Schiene 9 angeordnet, welche mittig durch die Zylinderteile 1A und 1 B sowie den Schaltkolben 2 in Bewegungsrichtung des Schaltkolbens verläuft.

Zum Schalten des Schaltkolbens 2 im Schaltzylinder 1 wird aus einer externen Druckquelle 138 über Druckleitungen 10 bzw. 11 ein pneumatisches oder hydraulisches Druckmittel der Schalteinrichtung 118 zugeführt. In den Druckleitungen 10 und 11 sind jeweils zwei elektromagnetische 2/2-Wegventile 4 und 5 bzw. 6 und 7 zwischengeschaltet, die den Durchfluss des Druckmittels durch die Druckleitungen 10 bzw. 11 derart steuern, dass sich der Schaltkolben 2 mit einer Geschwindigkeit, die einer empirisch oder über eine Simulation ermittelte Optimalgeschwindigkeit dieser Wegposition entspricht, bewegt. Die Art und Weise der Ventilansteuerung kann dabei getriebespezifisch von den zu schaltenden Massen angepasst werden. Die Entlüftung der Ventile 4, 5, 6 und 7 erfolgt über einen Geräuschdämpfer 146.

Die pulsfähigen Ventile 4, 5 und 6, 7 sind beispielsweise für den Dauerbetrieb bei 4 Volt ausgelegt, jedoch werden diese hier mit 24 Volt-Impulsen betrieben. Durch die Ansteuerung der Ventile 4, 5 und 6, 7 mit starken Strompulsen reagieren diese sehr schnell. Sie werden dabei in Abhangigkeit von der Stellung des Schaltkolbens 2 im Sclialtzylinder 1, weiche durch die Wegmesseinrichtung 3 erfasst wird, über die Steuereinrichtung 136 angesteuert. Je nach der Stellung des Schaltkolbens 2 werden unterschiedlich lange elektrische Impulse an die Pulsventile 4, 5 und 6, 7 abgegeben, wobei diese mit einer definierten hohen Pulsfrequenz für eine schnelle Kolbenverstellung und mit einer definierten geringeren Pulsfrequenz für eine langsame Kolbenverstellung angesteuert werden. So wird der Durchfluss von Druckmittel, welches den Schaltkolben 2 im Schaltzylinder 1 in Bewegung setzt, und damit auch die Geschwindigkeit des Schaltkolbens 2 während des Schaltvorgangs variiert.

Die Ansteuerung der Pulsventile 4, 5, 6 und 7 ist dabei so ausgelegt, dass alle pulsfähigen Ventile einzeln, gegeneinander oder miteinander ansteuerbar sind. Dadurch ergeben sich unterschiedliche Geschwindigkeiten für den Schaltkolben 2 und somit auch unterschiedliche dynamische Kräfte.

Auf diese Weise wird die Schaltkolbengeschwindigkeit von jeweils zwei pulsfähigen 2/2-Wegventilen derart variiert, dass der Schaltkolben 2 während des Schaltweges bis zu einem Synchronisationsbeginn des Getriebes möglichst mit voller Druckkraft und hoher Geschwindigkeit bewegt wird, und nach dem Ende der Synchronisierungsphase mit geringer Geschwindigkeit in seine Endstellung gebracht wird.

Wird bei einem Schaltvorgang Druckmittel durch die Leitung 10 der Schalteinrichtung 118 zugeführt, so ist das Pulsventil 5, das die Funktion eines Zuflussventils hat, geöffnet, während das als Abflussventil ausgebildete Pulsventil 4 geschlossen ist. Damit gelangt Druckmittel über die Leitung 10 durch das Zylinderteil 1A in den Arbeitsraum 12 des Schaltzylinders 1 und bewegt den Schaltkolben 2 von seiner Anschlagfläche 13 am Zylinderteil 1A in Richtung einer dieser Anschlagfläche 13 gegenüber liegenden Anschlagfläche 14 am Zylinderteil 1B.

Bei Eintreten einer Synchronisierungsphase im Getriebe verharrt der Schaltkolben 2 kurz vor seinem Anschlag an der Anschlagfläche 14 in einer Sperrstellung, wobei die Druckbeaufschlagung des Schaltkolbens 2 durch weitere Zuführung von Druckmittel durch die Leitung 10 erheblich zunimmt.

Der in Bewegungsrichtung des Schaltkolbens 2 liegende Teil des Arbeitsraumes 12 des Schaltzylinders 1 wird während des gesamten Schaltvorgangs über die Druckleitung 11 und das geöffnete Pulsventil 6, das als Abflussventil ausgestaltet ist, entspannt. Das der Druckmittelzuführleitung dienende Pulsventil 7 ist dabei geschlossen.

Mit Ende des Synchronisiervorgangs wird der Schaltkolben 2 entsperrt, womit sich dieser wieder in Richtung seiner Endposition an der Anschlagfläche 14 in Bewegung setzt, und zwar mit großer Geschwindigkeit aufgrund der hohen Druckbeaufschlagung während des Synchronisiervorgangs. Dabei wird die jeweilige Stellung des Schaltkolbens 2 von der Wegmesseinrichtung 3 erfasst, welche über elektrische Impulse die Pulsventile 6 und 7 derartig ansteuert, dass das der Entlüftung dienende Pulsventil 6 geschlossen wird. Dies führt dazu, dass ein sogenanntes Polster von Druckmittel die Bewegung des Schaltkolbens 2 auf dem letzten kurzen Wegstück zur Anschlagfläche 14 drastisch reduziert.

Die Druckzuführung über das Pulsventil 5 an der Druckleitung 10 wird bereits während oder gegen Ende des kurzfristigen Stillstands des Schaltkolbens 2 während der Synchronisationsphase des Getriebes durch Schließen des Zuleitungsventils 5 eingestellt.

Um den Schaltkolben 2 trotz des Druckmittelpolsters zwischen Schaltkolben 2 und Anschlagfläche 14 in seine Endstellung zu bringen, wird das Pulsventil 6 auf der Grundlage der Messwerte von der Wegmesseinrichtung 3 unmittelbar vor dem Anschlag des Schaltkolbens 2 an der Anschlagfläche 14 in eine geöffnete Stellung geschaltet, damit das zwischen dem Schaltkolben 2 und der Anschlagfläche 14 befindliche Druckmittel über die Druckleitung 11 entweichen kann und der Schaltkolben 2 bei seinem Anschlag an der Anschlagfläche 14 nicht zurückfedert.

Ein Anschlag wird aber nicht vermieden, wobei die Höhe der Auftreffkraft des Stellkolbens 2 von dessen Auftreffgeschwindigkeit und der Masse der bewegten Teile der Schalteinrichtung 118 abhängt.

Diese bekannte Schalteinrichtung ist an sich sehr vorteilhaft. Es ist aber nicht bekannt, wie die zeitliche Steuerung der Pulsventile durchgeführt werden muss, um ein Druckmittelpolster zu schaffen, welches groß genug ist, um ein sicheres und geräuscharmes Verbinden der Verzahnungen von Schiebemuffe und Losrad zu gewährleisten. Dabei ist nicht nur der störungsfreie Betriebsfall zu berücksichtigen, sondem auch die bereits beschriebene problematische Zahn-auf-Zahn-Stellung von Schiebemuffe und Losrad.

Zwar wird in der DE 197 56 637 A1 vorgeschlagen, dass zur Vermeidung von Schaltungen bei einer Zahn-auf-Zahn-Stellung der zu verbindenden Verzahnungen eine Überwachung einer solchen Stellung vorgesehen sein kann. In einem solchen Fall soll die Synchronkraft minimiert werden, damit in der Synchronisierung ein Schleppmoment erzielt werden kann, welches die Zahn-auf-Zahn-Stellung auflöst. Aufgrund welcher Messgrößen und mit welchem Verfahren starke Auftreffgeräusche von Teilen des Getriebes bzw. der Schalteinrichtung bei einem Schaltvorgang vermeidbar sind, ist dort jedoch nicht beschrieben.

Der Erfindung liegt vor diesem Hintergrund die Aufgabe zugrunde, ein Verfahren vorzustellen, mit dem bei einem automatisierten Schaltgetriebe während einer Schaltung sowohl bei einem störungsfreien Verbinden von Schiebemuffe und Losrad als auch bei Zahn-auf-Zahn-Stellungen sowie deren Auflösung die von der Schaltung betroffenen Bauteile mechanisch so gering wie möglich belastet werden und die Schaltung so leise wie möglich ablaufen kann.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

Die Erfindung betrifft gemäß den Merkmalen des Hauptanspruchs demnach ein Verfahren zur Steuerung von Schaltabläufen in einem automatisierten Schaltgetriebe in Vorgelegebauweise, mit wenigstens einer Antriebswelle und wenigstens einer Abtriebswelle, mit auf diesen Wellen drehbar gelagerten Losrädern und drehfest angeordneten Festrädern, die zur Bildung von Gangstufen paarweise miteinander im Zahneingriff sind, mit wenigstens einer Schiebemuffe, die axial verschiebbar und drehfest auf einer Getriebewelle benachbart zu wenigstens einem Losrad angeordnet ist und mittels einer Stelleinrichtung axial so weit an das Losrad heranführbar ist, dass eine Innen- oder Außenverzahnung der Schiebemuffe mit einer Mitnahmeverzahnung des Losrads koppelbar ist.

Dabei erfolgt die Steuerung der Stelleinrichtung zur Bewegung der Schiebemuffe mittels einer Steuereinrichtung, welche diese Steuerung auf der Grundlage von Sensorinformationen über den Betriebszustand des Getriebes durchführt, wobei eine Zahn-auf-Zahn-Stellungen zwischen der Innen- oder Außenverzahnung der Schiebemuffe und der Mitnahmeverzahnung des Losrades dadurch aufgelöst wird, dass diese Teile gegeneinander verdreht werden. Zudem ist das Verfahren dadurch gekennzeichnet, dass die Steuerung der Betätigungsbewegung der Stelleinrichtung derart geschieht, dass ein betätigungsbedingter Aufprall der an dem Schaltvorgang beteiligten Getriebeteile auf andere Getriebeteile mit einer geringst möglichen Auftreffkraft und/oder mit einem geringst möglichen Auftreffgeräusch erfolgt.

Bevorzugt ist in diesem Zusammenhang vorgesehen, dass die Steuerung der Betätigungsbewegung der Stelleinrichtung derart abläuft, dass ein betätigungsbedingter Aufprall des beweglichen Teils 2 der Stelleinrichtung an einem Anschlag 14, ein Aufprall der Stirnseiten der Innenverzahnung der Schiebemuffe und der Mitnahmeverzahnung des Losrades (Zahn-auf-Zahn-Stellung), ein Aufprall der Zahnköpfe auf den gegenüberliegenden Zahnböden (Zahnkopf-Zahnboden-Stellung) dieser Verzahnungen und/oder ein Aufprall eines anderen an der Schaltung beteiligten Getriebeteils auf das Getriebegehäuse mit einer geringst möglichen Auftreffkraft und/oder mit einem geringst möglichen Auftreffgeräusch erfolgt.

Erfindungsgemäß ist vorgesehen, dass zur Minimierung der Auftreffkraft und/oder des Auftreffgeräusches die axiale Position des Anschlags 14, der Zahn-auf-Zahn-Stellung und/oder die Zahnkopf-Zahnboden-Stellung ausgehend von einer Ausgangsposition ermittelt und abgespeichert wird, und dass diese Positionen bei nachfolgenden gleichartigen Schaltvorgängen mit verringerter Stellgeschwindigkeit angefahren werden.

Zur Durchführung des Verfahrens gemäß der Erfindung kann ein druckmittelbetriebener, ein elektromagnetischer oder ein elektromotorischer Aktuator genutzt werden. Zur Bestimmung der geringst möglichen Auftreffkraft und/oder des geringst möglichen Auftreffgeräusches wird der Luftschall des Auftreffgeräusches oder der Körperschall eines Teils der Stelleinrichtung 118, der Schiebemuffe 126 oder des Getriebegehäuses gemessen und berücksichtigt. Ein diesbezügliches praktikables Teil der Stelleinrichtung 118 ist beispielsweise das Zylinderteil 1A bzw. 1B des Stellzylinders 1.

Ergänzend kann die Drehzahl des Stellmotors und/oder der Betätigungsweg des beweglichen Teils der Stelleinrichtung oder der Schiebemuffe 126 gemessen und berücksichtigt. Ein solches bewegliches Teil der Schalteinrictung 118 kann beispielsweise der Schaltkolben 2 sein.

Des Weiteren kann ergänzend vorgesehen sein, dass zur Bestimmung der geringst möglichen Auftreffkraft und/oder des geringst möglichen Auftreffgeräusches der zeitliche Verlauf der Spannung und/oder des Stroms der elektromotorisch oder elektromagnetisch ausgebildeten Stelleinrichtung gemessen und berücksichtigt wird.

Ergänzend dazu kann vorgesehen sein, dass zur Bestimmung der geringst möglichen Auftreffkraft und/oder des geringst möglichen Auftreffgeräusches, die Betätigungsgeschwindigkeit und/oder die Betätigungsbeschleunigung des beweglichen Teils 2 der Stelleinrichtung 118 oder der Schiebemuffe 126 gemessen und berücksichtigt wird.

Additiv zu den zuvor genannten Messgrößen kann vorgesehen ein, dass zur Bestimmung der geringst möglichen Auftreffkraft und/oder des geringst möglichen Auftreffgeräusches der Druckverlauf des Druckmittels in einem Arbeitsraum 12 des Schaltzylinders 1 der Stelleinrichtung 118 während dessen Betätigung gemessen und berücksichtigt wird.

Zur Auswertung der vorgenannten Messgrößen, insbesondere zur Feststellung der geringst möglichen Auftreffkraft und/oder des geringst möglichen Auftreffgeräusches, ist gemäß einer Variante der Erfindung vorgesehen, dass das Frequenzspektrum des Auftreffgeräusches oder des Druckverlaufs oder des Verlaufs der elektrischen Spannung und/oder des elektrischem Stromes der elektromotorischen oder elektromagnetischen Stelleinrichtung mittels einer FFT-Analyse (Fast Fourier Funktion) analysiert wird.

Gemäß einer weiteren Variante der Erfindung ist vorgesehen, dass zur Bewegung der Schiebemuffe 126 ein hydraulischer oder pneumatischer Aktuator 118 genutzt wird, welcher von vier als Pulsventile ausgebildete 2/2-Wegventilen 4, 5, 6 und 7 zur Steuerung und Regelung der Betätigungsbewegung seines Stellkolbens 2 angesteuert wird. Es ist jedoch auch möglich, dass dazu wenigstens zwei elektromagnetisch betätigbare Proportionalventile genutzt werden.

Schließlich kann dass Verfahren ergänzend vorsehen, dass zur Bestimmung der geringst möglichen Auftreffkraft und/oder des geringst möglichen Auftreffgeräusches der Druck des Druckmittels, der elektrische Steuerstrom oder die elektrische Spannung der Stelleinrichtung so eingestellt wird, dass eine sichere mechanische Kopplung zwischen der Schiebemuffe und dem Losrad bei minimalem Auftreffgeräusch, beispielsweise nach der Auflösung einer Zahn-auf-Zahn-Stellung realisiert wird.

Eine Schaltvorrichtung zur Durchführung dieses Verfahrens weist daher in Weiterentwicklung des Standes der Technik gemäß Fig. 3 zusätzlich wenigstens eine Schallsensor auf, der als Luftschallsensor 15 oder als Körperschallsensor 16 ausgebildet und im oder am Getriebe angeordnet sowie mit der Steuereinrichtung 136 verbunden ist. In Fig. 3 ist der Körperschallsensor 16 am Zylinderteil 1B angeordnet.

Additiv dazu kann in einer solchen Schalteinrichtung 118 wenigstens ein Drucksensor 17, 18 in dem Arbeitsraum 12 des Schaltzylinders f oder in den zu dem Arbeitsraum 12 führenden Druckleitungen 10, 11 angeordnet sein. Diese Drucksensoren 17, 18 sind ebenfalls signaltechnisch mit der Steuereinrichtung 136 verbunden.

Die Werte für die Betätigungsgeschwindigkeit und die Betätigungsbeschleunigung des Stellkolbens 2 lassen sich aus dem zeitlichen Verlauf des Wegmesssignals der Wegmesseinrichtung ableiten.

### Bezugszeichen

- 1: Schaltzylinder
- 1A: Zylinderteil
- 1 B: Zylinderteil
- 2: Schaltkolben
- 2A: Schaltgabel
- 2B: Führungsabsatz
- 3: Wegmesseinrichtung
- 4: pulsfähiges Ventil
- 5: pulsfähiges Ventil
- 6: pulsfähiges Ventil
- 7: pulsfähiges Ventil
- 8: Eindrehung
- 9: Führungsschiene
- 10: Druckleitung
- 11: Druckleitung
- 12: Arbeitsraum des Schaltzylinders
- 13: Anschlagfläche
- 14: Anschlagfläche
- 15: Luftschallsensor
- 16: Körperschallsensor
- 17: Drucksensor
- 18: Drucksensor
- 102: Getriebe
- 104: Kupplungsglocke
- 106: Hauptgetriebe
- 108: Hilfsgetriebe
- 110: Antriebswelle
- 112: Abtriebswelle
- 114: Abtriebsflansch
- 116: Schalteinrichtung
- 118: Schalteinrichtung, Aktuator
- 120: Schalteinrichtung, Aktuator
- 122: Schalteinrichtung, Aktuator
- 124: Schaltgabel
- 126: Schiebemuffe
- 128: Welle
- 130: Zahnrad, Losrad
- 132: Zahnrad, Losrad
- 134: Steuerleitung
- 136: Steuereinrichtung
- 138: Druckquelle
- 140: Druckleitung
- 144: Verbindungselement
- 146: Geräuschdämpfer

## Patentansprüche

1. Verfahren zur Steuerung von Schaltabläufen in einem automatisierten Schaltgetriebe (102) in Vorgelegebauweise, mit wenigstens einer Antriebswelle (110) und wenigstens einer Abtriebswelle (112), mit auf diesen Wellen drehbar gelagerten Losrädern (130, 132) und drehfest angeordneten Festrädem, die zur Bildung von Gangstufen paarweise miteinander im Zahneingriff sind, mit wenigstens einer Schiebemuffe (126), die axial verschiebbar und drehfest auf einer Getriebewelle (128) benachbart zu wenigstens einem Losrad (130, 132) angeordnet ist und mittels einer Stelleinrichtung (118, 120, 122) axial so weit an das Losrad (130, 132) heranführbar ist, dass eine Verzahnung der Schiebemuffe (126) mit einer Mitnahmeverzahnung des Losrads (130, 132) koppelbar ist, wobei die Steuerung der Stelleinrichtung (118,120, 122) zur Bewegung der Schiebemuffe (126) von einer Steuereinrichtung (136) gesteuert wird, welche die Steuerung auf der Grundlage von Sensorinformationen über den Betriebszustand des Getriebes (102) durchführt, und bei dem Zahn-auf-Zahn-Stellungen zwischen der Verzahnung der Schiebemuffe (126) und der Mitnahmeverzahnung des Losrades (130, 132) dadurch aufgelöst werden, dass diese gegeneinander verdreht werden, wobei die Steuerung der Betätigungsbewegung der Stelleinrichtung (118, 120, 122) derart erfolgt, dass ein betätigungsbedingter Aufprall der an dem Schaltvorgang beteiligten Getriebeteile auf andere Getriebeteile mit einer geringst möglichen Auftreffkraft und/oder mit einem geringst möglichen Auftreffgeräusch erfolgt, indem, ausgehend von einer Ausgangsstellung, die axiale Position des Anschlags der Zahn-auf-Zahn-Stellung und/oder die Zahnkopf-Zahnboden-Stellung ermittelt und abgespeichert wird, und dass diese Position bei nachfolgenden gleichartigen Schaltvorgängen mit verringerter Stellgeschwindigkeit angefahren wird, **dadurch gekennzeichnet, dass** zur Bestimmung der geringst möglichen Auftreffkraft und/oder des geringst möglichen Auftreffgeräusches der Luftschall des Auftreffgeräusches oder der Körperschall eines Teils (1A, 1B, 2) der Stelleinrichtung (118, 120, 122), der Schiebemuffe (126) oder des Getriebegehäuses gemessen und berücksichtigt wird.

2. Verfahren nach Anspruch 1, **dadurch gekennzeichnet, dass** zur Bestimmung der geringst möglichen Auftreffkraft und/oder des geringst möglichen Auftreffgeräusches der Druckverlauf des Druckmittels in einem Arbeitsraum (12) des Schaltzylinders (1) der Stelleinrichtung (118, 120, 122) während dessen Betätigung gemessen und berücksichtigt wird.

3. Verfahren nach Anspruch 1 oder 2, **dadurch gekennzeichnet, dass** zur Auftreffkraftbestimmung das Frequenzspektrum des Auftreffgeräusches mittels einer FFT-Analyse (Fast Fourier Funktion) analysiert wird.

4. Verfahren nach Anspruch 1, 2 oder 3, **dadurch gekennzeichnet, dass** als Stelleinrichtung (118, 120, 122) ein druckmittelbetriebener, ein elektromagnetischer oder ein elektromotorischer Aktuator genutzt wird.

5. Verfahren nach einem der vorherigen Ansprüche, **dadurch gekennzeichnet, dass** zur Bestimmung der geringst möglichen Auftreffkraft und/oder des geringst möglichen Auftreffgeräusches die Drehzahl des Stellmotors und/oder der Betätigungsweg des beweglichen Teils (2) der Stelleinrichtung (118, 120, 122) oder der Schiebemuffe (126) gemessen und berücksichtigt wird.

6. Verfahren nach Anspruch 4 oder 5, **dadurch gekennzeichnet, dass** zur Bestimmung der geringst möglichen Auftreffkraft und/oder des geringst möglichen Auftreffgeräusches der zeitliche Verlauf der Spannung und/oder des Stroms der elektromotorisch oder elektromagnetisch ausgebildeten Stelleinrichtung gemessen und berücksichtigt wird.

7. Verfahren nach einem der vorherigen Ansprüche, **dadurch gekennzeichnet, dass** zur Bestimmung der geringst möglichen Auftreffkraft und/oder des geringst möglichen Auftreffgeräusches die Betätigungsgeschwindigkeit und/oder die Betätigungsbeschleunigung des beweglichen Teils (2) der Stelleinrichtung (118, 120, 122) oder der Schiebemuffe (126) gemessen und berücksichtigt wird.

8. Verfahren nach einem der vorherigen Ansprüche, **dadurch gekennzeichnet, dass** eine hydraulisch oder pneumatisch betätigbare Stelleinrichtung (118, 120, 122) genutzt wird, welche von vier 2/2-Wegventilen (4, 5, 6, 7) oder von zwei Proportionalventilen zur Steuerung und Regelung seiner Betätigungsbewegung angesteuert wird.

9. Verfahren nach einem der vorherigen Ansprüche, **dadurch gekennzeichnet, dass** zur Bestimmung der geringst möglichen Auftreffkraft und/oder des geringst möglichen Auftreffgeräusches der Druck des Druckmittels, der elektrische Strom oder die elektrische Spannung der Stelleinrichtung (118, 120, 122) so eingestellt wird, dass eine sichere mechanische Kopplung zwischen der Schiebemuffe (126) und dem Losrad (130, 132) bei minimalem Auftreffgeräusch nach der Auflösung einer Zahn-auf-Zahn-Stellung realisiert wird.

## Claims

1. Method for controlling shifting processes in an automated countershaft-type mechanical transmission (102) with at least one input shaft (110) and at least one output shaft (112), with rotationally supported idler gears (130,132) on these shafts, as well as nonrotationally arranged fixed gears, pairs of which mesh to create gear steps, with at least one sliding sleeve (126) which is arranged axially displaceable and nonrotationally on a transmission shaft (128) adjacent to at least one idler gear (130,132) and by means of a positioner (118,120,122) can be shifted axially far enough towards the idler gear (130,132) to permit interlocking between gears of the sliding sleeve (126) and driving gears of the ilder gear (130,132), with the control of the positioner (118,120, 122) for the shifting of the sliding sleeve (126) being controlled by a control device (136) which operates on the basis of sensor information about the operating condition of the transmission (102) and which cancels tooth-on-tooth positions between the teeth of the sliding sleeve (126) and the driving teeth of the ilder gear (130,132) by rotating them against each other, with control of the actuating movement of the positioner (118, 120, 122) being performed in such a way that any actuation-related collision of the transmission parts involved in the shifting process with other transmission parts will take place with the least-possible impact force and/or the least-possible impact noise, this being achieved through determination - starting from an initial position - and storage of the axial impact position of the tooth-on-tooth position and/or addendum-dedendum position, and in that subsequent similar shifts to this position are performed at a reduced positioning rate, **characterized in that** the airborne sound of the impact noise or the structure-borne sound of a part (1A, 1 B, 2) of the positioner (118,120, 122), the sliding sleeve (126) or the transmission housing is measured and considered for determining the Wast-possible impact force and/or the least-possible impact noise.

2. Method according to claim 1, **characterized in that** the pressure profile of the pressurized medium in a working chamber (12) of the shift cylinder (1) of the positioner (118, 120, 122) during its actuation is measured and considered for determination of the least-possible impact force and/or the least-possible impact noise.

3. Method according to claim 1 or 2, **characterized in that** the frequency spectrum of the impact noise is subjected to a fast Fourier analysis for determination of the impact force.

4. Method according to claim 1, 2 or 3, **characterized in that** a pressure-medium-operated, an electromagnetic or an electromotive actuator is used as positioner (118,120, 122).

5. Method according to one of the preceding claims, **characterized in that** the speed of the control motor and/or the actuation travel of the movable part (2) of the positioner (118,120, 122) or the sliding sleeve (126) is measured and considered for determination of the least-possible impact force and/or the least-possible impact noise.

6. Method according to claim 4 or 5 **characterized in that** the temporal profile of the voltage and/or the current of the electromotive or electromagnetic positioner is measured and considered for determination of the least-possible impact force and/or the least-possible impact noise.

7. Method according to one of the preceding claims, **characterized in that** atuation rate and/or the actuation acceleration of the movable part (2) of the positioner (118,120, 122) or the sliding sleeve (126) is measured and considered for determination of the least possible impact force and/or the least-possible impact noise.

8. Method according to one of the preceding claims, **characterized in that** a hydraulically or pneumatically controllable positioner (118,120, 122) is employed, which is actuated by four 2/2-way valves (4,5,6,7) or two proportional valves for control of its actuating motion.

9. Method according to one of the preceding claims, **characterized in that** for determination of the least-possible impact force and/or the least-possible impact noise, the pressure of the pressurized medium, the electric current, or the electric voltage of the positioner (118,120,122) is adjusted to ensure reliable mechanical meshing between sliding sleeve (126) and idler gear (130,132), and to realize minimal impact noise after cancelation of a tooth-on-tooth position.

## Revendications

1. Procédé de commande des processus de changement de vitesses dans une boîte mécanique automatisée (102) à arbre intermédiaire, dotée d'au moins un arbre d'entrée (110) et au moins dun arbre de sortie (112), avec des pignons fous (130,132) montés à rotation sur ces arbres et avec des pignons fixes disposés de façon solidaire en rotation, ceux-ci engrenant par paires pour former des rapports, avec au moins un coulisseau (126), celui-ci pouvant être déplacé axialement et étant juxtaposé de façon solidaire en rotation sur un arbre de boite de vitesses (128) à au moins un pignon fou (130,132), et pouvant être rapproché à l'aide dun dispositif actionneur (118,120,122) axialement au pignon fou (130,132) jusqu'à ce qu'une denture du coulisseau (126) puisse être couplée à une denture d'entraînement du pignon fou (130,132), sachant que la commande du dispositif actionneur (118,120,122) pour le déplacement du coulisseau (126) est commandée par un dispositif de commande (136), celui-ci effectuant la commande sur la base d'informations sur l'état de fonctionnement de la boîte de vitesses (102) transmises par des capteurs, et sachant que des positions dent-sur-dent entre la denture du coulisseau (126) et la denture d'entraînement du pignon fou (130,132) peuvent être libérées en les tournant les unes par rapport aux autres, sachant que la commande du mouvement d'actionnement du dispositif actionneur (118,120,122) est effectuée de manière à ce que tout impact dû à l'actionnement des éléments de la boîte de vitesses participant au changement de rapport sur d'autres éléments de la boîte de vitesses aura lieu avec une force d'impact la plus petite possible et/ou avec un bruit d'impact le plus faible possible, et cela - à partir dune position de départ - en déterminant et enregistrant la position axiale de la butée de la position dent-sur-dent et/ou la position tête de dent-pied de dent, et à ce que la sélection de cette position s'effectue lors des processus de changement de rapport suivants et similaires avec une vitesse de réglage réduite, **caractérisé en ce que** pour la détermination de la force d'impact la plus petite possible et/ou du bruit d'impact le plus faible possible est mesuré et pris en considération le niveau du bruit d'impact ou le bruit solidien dun élément (1A, 1 B, 2) du dispositif actionneur (118,120, 122), du coulisseau (126) ou du carter de la boîte de vitesses.

2. Procédé selon la revendication 1, **caractérisé en ce que** pour la détermination de la force d'impact la plus petite possible et/ou du bruit d'impact le plus faible possible est mesuré et pris en considération l'allure de la pression du fluide de pression dans une chambre de travail (12) du vérin de commande (1) du dispositif actionneur (118,120,122) pendant son actionnement.

3. Procédé selon les revendications 1 ou 2, **caractérisé en ce que** pour la détermination de la force d'impact, le spectre de fréquences du bruit d'impact est analysé à raide d'une analyse FFT (Fast Fourier Transform).

4. Procédé selon les revendications 1, 2 ou 3, **caractérisé en ce que**, en tant que dispositif actionneur (118,120,122) est utilisé un actionneur actionné par fluide de pression, par électro-aimant ou par un moteur électrique.

5. Procédé selon une des revendications précédentes, **caractérisé en ce que** pour la détermination de la force d'impact la plus petite possible et/ou du bruit d'impact le plus faible possible est mesuré et pris en considération le régime du moteur actionneur et/ou la course d'actionnement de l'élément mobile (2) du dispositif actionneur (118,120,122) ou du coulisseau (126).

6. Procédé selon la revendication 4 ou 5, **caractérisé en ce que** pour la détermination de la force d'impact la plus petite possible et/ou du bruit d'impact le plus faible possible est mesuré et pris en considération la courbe temporelle de la tension et/ou du courant du dispositif actionneur réalisé comme dispositif actionné par voie électromagnétique ou par moteur électrique.

7. Procédé selon une des revendications **caractérisé en ce que** pour la détermination de la force d'impact la plus petite possible et/ou du bruit d'impact le plus faible possible est mesuré et pris en considération la vitesse d'actionnement et/ou l'accélération d'actionnement de l'élément mobile (2) du dispositif actionneur (118,120,122) ou du coulisseau (126).

8. Procédé selon une des revendications précédentes, **caractérisé en ce que** est utilisé un dispositif actionneur (118,120,122), qui peut être actionné par voie hydraulique ou pneumatique, celui-ci étant piloté par quatre distributeurs 2/2 (4, 5, 6, 7) ou par deux électrovannes proportionnelles pour la commande et le réglage du mouvement d'actionnement .

9. Procédé selon une des revendications précédents, **caractérisé en ce que** pour la détermination de la force dimpact la plus petite possible et/ou du bruit d'impact le plus faible possible la pression du fluide de pression, le courant ou la tension du dispositif actionneur (118,120, 122) sont réglés de manière à ce que entre le coulisseau (126) et le pignon fou (130,132) est réalisé une liaison mécanique sûre, tout en garantissant un bruit d'impact minimal après la libération de la position dent-sur-dent
